# EUROPÄISCHE PATENTANMELDUNG

(11) **EP 4 257 399 A1**
(43) Veröffentlichungstag der Anmeldung: **11.10.2023**
(21) Anmeldenummer: 22167515.0
(22) Anmeldetag: 09.04.2022
(51) Int. Cl.: B60K 15/03, B60K 15/063, B60K 15/067, B60K 15/073

(54) **KRAFTSTOFFTANKVORRICHTUNG UND SCHNELLWECHSEL-SYSTEM**

(71) Anmelder: MARMIX GmbH & Co. KG, 89597 Unterwachingen (DE)
(72) Erfinder: Kaesemann, Thomas, 89597 Unterwachingen (DE)
(74) Vertreter: Kimpfbeck, Thomas

(57) **Zusammenfassung**

Es wird eine Kraftstofftankvorrichtung (100) für einen Anhänger (206, 210) oder ein Anbaugerät (202, 204, 208, 214, 216, 218) vorgeschlagen. Die Kraftstofftankvorrichtung (100) umfasst einen ersten Tank (102; 204) zum Bevorraten von Wasserstoff, ein Befestigungsmittel (104), wobei das Befestigungsmittel (104) ausgelegt ist den ersten Tank (102; 204) lösbar zu halten und wobei das Befestigungsmittel (104) ausgelegt ist, um an einer Zugvorrichtung (114; 212) des Anhängers (206, 210) oder am Anbaugerät (202, 204, 208, 214, 216, 218) befestigt zu sein. Ferner wird ein Schnellwechselsystem, ein Gespann mit der Kraftstofftankvorrichtung, ein Sicherungsverfahren zum Sichern der Kraftstofftankvorrichtung und ein Überwachungsverfahren zum Überwachen des Gespanns vorgeschlagen.

## Beschreibung

### TECHNISCHES GEBIET

Die vorliegende Erfindung betrifft eine Kraftstofftankvorrichtung für einen Anhänger oder ein Anbaugerät, ein Schnellwechselsystem, ein Gespann mit der Kraftstofftankvorrichtung, ein Sicherungsverfahren zum Sichern der Kraftstofftankvorrichtung und ein Überwachungsverfahren zum Überwachen des Gespanns.

### STAND DER TECHNIK

Herkömmliche Nutzfahrzeuge, wie zum Beispiel Traktoren und Lastkraftwagen, werden überwiegend von Dieselmotoren angetrieben. Dieselmotoren gelten als sparsam, langlebig und sie produzieren weniger umweltschädliches Kohlendioxid als Benzinmotoren. Dieselmotoren arbeiten mit einem höheren Verdichtungsverhältnis und mit höheren Verbrennungstemperaturen als Benzinmotoren. Deshalb sind Dieselmotoren meist robuster, schwerer und teurer als Benzinmotoren. Dieselkraftstoff weist eine höhere Energiedichte als Benzin auf, sodass Dieselfahrzeuge entweder mit einem kleineren Tank als Benzinfahrzeuge auskommen oder eine höhere Reichweite bzw. Betriebszeit mit einer Tankfüllung haben als Benzinfahrzeuge. Bei der Verbrennung erzeugen Dieselmotoren Rußpartikel, die auch Feinstaub enthalten. Die Rußpartikel werden heutzutage aufwendig durch Dieselpartikelfilter reduziert. Dies verteuert den Einsatz von Dieselmotoren. Ferner erzeugen Dieselmotoren gesundheitsschädliche Stickoxide NOx. Mittels spezieller Katalysatoren mit Harnstoff wird derzeit versucht, den Stickstoffdioxidausstoß bei Dieselmotoren zu reduzieren; auch dies ist aufwendig und teuer.

Um den Problemen von Verbrennungsmotoren für fossile Kraftstoffe zu begegnen ist seit langem bekannt, Dieselmotoren auf die Verbrennung von Wasserstoff umzurüsten, die auch als Wasserstoffmotoren bezeichnet werden. Wasserstoff hat eine höhere Energiedichte als Dieselkraftstoff. Da Wasserstoff keine Kohlenstoffatome enthält, ist das Verbrennungsabgas in solchen Motoren im Wesentlichen umweltschonender und nicht gesundheitsgefährdender Wasserdampf.

Wasserstoff hat unter Normalbedingungen eine geringe Dichte von 0,089882 kg/m3. Für einen effizienten Betrieb eines Fahrzeugs mit Wasserstoffmotor ist daher die ausreichende Speicherung bzw. Bevorratung von Wasserstoff wichtig.

Häufig wird Wasserstoff in dedizierten Tanks bevorratet, die wiederum auf Fahrzeugkabinen-Dächern, an Traktorschutzblechen oder nahe an Fahrzeugachsen montiert sind.

Aus der WO 2020/108712 A1 ist ein autonomes landwirtschaftliches Arbeitsfahrzeug bekannt, das einen Dieseltank umfasst. Der Dieseltank ist zusammen mit einem Antrieb seitlich auf dem Arbeitsfahrzeugs angeordnet. Der Dieseltank ist in einer Ausführungsform ein Wasserstofftank.

Aus der EP 3 597 466 A1 ein Nutzfahrzeuggespann bekannt. Dieses Nutzfahrzeuggespann hat einen Leiterrahmen mit zwei parallelen Hauptlängsträgern. Auf Höhe der Hauptlängsträger sind ein oder mehrere Wasserstoffdruckspeicher angeordnet. Die Anordnung der Wasserstoffdruckspeicher zwischen den Hauptlängsträgern ermöglicht die Ausnutzung zusätzlichen, bisher ungenutzten Volumens zur Reichweitenerhöhung.

Aus der GB 532,207 A ist ein Anhänger bekannt. Dieser Anhänger hat einen Fahrzeugrahmen, auf dem ein keilförmiger Stapel von Gaszylindern angeordnet ist. Die Gaszylinder sind über eine Ventil befüllbar. Das Ventil und Rohrleitungen erlauben außerdem das Gas einem Zugfahrzeug zuzuführen. Ein Sicherheitsventilsystem wird ebenfalls darin vorgeschlagen.

Aus der CN 111452612 A ist ein automatisches Befestigungssystem für die Befestigung von Wasserstofftanks in Fahrzeugen bekannt. Das Befestigungssystem ermöglicht das Austauschen des Wasserstofftanks. Dadurch soll ein manuelles, gefährliches und zeitaufwendiges Befüllen des Wasserstofftanks an Tankstellen ersetzt werden.

Aus der DE202020102000 U1 ist Reichweitenvergrößerungsvorrichtung für ein Elektrofahrzeug bekannt. Diese Vorrichtung umfasst einen Wasserstofftank und eine Brennstoffzelle. Der Wasserstofftank und die Brennstoffzelle sind in einem Laderaum des Elektrofahrzeugs demontierbar angeordnet.

Aus der US 2015/0291133 A1 ist ein mobiles bzw. entfernbares Treibstofftanksystem für Bergbau-Großmuldenkipper bekannt. Austausch-Tanks können mittels eines Spezialanhängers und/oder eines Gabelstapler in den Bergbau-Großmuldenkipper geladen werden.

Aus der WO 2021/151641 A1 ist eine Tankvorrichtung für ein Brennstoffzellensystem bekannt. Die Tankvorrichtung weist mindestens zwei Tankbehälter auf, die jeweils ein Sicherheitsventil umfassen.

Aus einer Abbildung der EP 2 338 194 A2 ist ein gezogenes Arbeitsgerät bekannt, auf dessen Ladefläche mehrere Tanks für gasförmigen Kraftstoff angeordnet sind. Der Kraftstoff kann für den Antrieb des Arbeitsgeräte oder eines Zugfahrzeugs verwendet werden. Das Zugfahrzeug hat einen eigenen Tank.

### AUFGABE

Somit besteht die Aufgabe der Erfindung darin, eine Kraftstofftankvorrichtung und ein Schnellwechsel-System bereitzustellen, die ein platzsparendes Anordnen und ein schnelles Befestigen und Lösen eines auf Anhängern oder Anbaugeräten mitgeführten Wasserstofftanks ermöglichen, um die Reichweite eines Zugfahrzeugs zu erhöhen.

### ZUSAMMENFASSUNG DER ERFINDUNG

Erfindungsgemäß wird eine Kraftstofftankvorrichtung für einen Anhänger oder ein Anbaugerät gemäß Anspruch 1 zur Verfügung gestellt. Die Kraftstofftankvorrichtung umfasst insbesondere einen ersten Tank zum Bevorraten von Wasserstoff. Die Kraftstofftankvorrichtung kann ferner ein Befestigungsmittel umfassen, das den ersten Tank lösbar hält. Das Befestigungsmittel kann ausgelegt sein, um an einer Zugvorrichtung des Anhängers oder am Anbaugerät befestigt zu werden.

Der erste Tank ist im Wesentlichen ein geschlossenes Element mit einer Wandung, die einen Hohlraum umschließt. Der erste Tank hat ein Volumen von vorzugsweise 100 bis 500 Liter, noch bevorzugter von 200 bis 300 Liter. Insbesondere ist der erste Tank zylinderförmig und weist einen nach außen gewölbten Boden und einen nach außen gewölbten Deckel auf, wobei die Zylinderform und die Wölbungen von Boden und Deckel die Stabilität bzw. Druckfestigkeit des ersten Tanks verbessern können. Der erste Tank ist für Drücke von 600 bis 800 bar, noch bevorzugter 700 bar, ausgelegt.

Der erste Tank kann Metall oder kohlenstofffaserverstärkten Kunststoff umfassen. Der erste Tank ist vorzugsweise ungekühlt. Ferner benötigt der erste Tank insbesondere keine Wärmeisolation.

Alternativ kann der erste Tank eine Kugelform, Ellipsenform, Quaderform oder Dreieck-Zylinderform aufweisen. Die ersten beiden Formen verbessern insbesondere die Druckfestigkeit. Die letzten beiden Formen können Bauraum optimaler nutzen. Die Dreieck-Zylinderform kann etwa der Form eines Traktor-Hubwerks mit Oberlenker und zwei Unterlenkern entsprechen. Insbesondere ist die Form bzw. Größe des ersten Tanks so ausgelegt, dass sie innerhalb bzw. kleiner als eine Kontur der Zugvorrichtung ist.

Wasserstoff meint insbesondere das chemisches Element mit dem Symbol H (lateinisch hydrogenium) und der Ordnungszahl 1 im Periodensystem. Wasserstoff ist im Allgemeinen ein Energieträger, der in Wasserstoffverbrennungsmotoren oder Brennstoffzellen eingesetzt wird. Bei der Verbrennung von Wasserstoff entsteht im Wesentlichen Wasser; diese Verbrennung ist also im Allgemeinen umweltfreundlich. Wasserstoff enthält ca. 141,8 MJ/kg Energie pro Masse. Der Wasserstoff wird im ersten Tank vorzugsweise gasförmig gespeichert. Der Wasserstoff ist dabei insbesondere gasförmig. Alternativ kann der Wasserstoff flüssig sein. Ferner kann statt Wasserstoff ein anderes brennbares Kraftstofffluid zum Einsatz kommen, etwa Methan, Butan, Propan und/oder Gemische daraus.

Das Bevorraten von Wasserstoff meint im Allgemeinen ein vorübergehendes Speichern, ein Bunkern, Lagern und/oder Tanken. Das Bevorraten dienst insbesondere dazu, den Wasserstoff einem Wasserstoffmotor eines Fahrzeugs zur Verbrennung zuführen zu können.

Das Befestigungsmittel umfasst vorzugsweise eine Metallplatte oder einen Metallrahmen. Das Befestigungsmittel weist gemäß einer bevorzugten Weiterbildung eine Abmessung auf, die größer als eine Abmessung des ersten Tanks sein kann. Insbesondere weist das Befestigungsmittel eine Rechteckform auf, die eine Breiten- und Längenabmessung hat. Der erste Tank hat dabei vorzugsweise eine kürzere Breiten- und/oder Längenabmessung als das Befestigungsmittel. Anders gesagt, das Befestigungsmittel steht über die Abmessung des ersten Tanks vor.

Das Befestigungsmittel kann einen Anfahrschutz bilden. Allgemeiner ausgedrückt kann das Befestigungsmittel den ersten Tank vor gefährlichen Umgebungseinflüssen wie Steinschlag, Hitze, Kälte, Kollisionen mit anderen Fahrzeugen und dergleichen schützen. Das Befestigungsmittel kann einen Überrollkäfig umfassen. Das Befestigungsmittel bildet insbesondere eine Schnellwechselplattform, die ein schnelles, z.B. werkzeugloses oder einhändiges, Befestigen und Lösen des ersten Tanks bezüglich des Befestigungsmittels ermöglicht. Das Befestigungsmittel ermöglicht vorteilhaft den Tank nicht direkt mit der Zugvorrichtung oder dem Anbaugerät und unlösbar verbinden zu müssen.

Die erfindungsgemäße Kraftstofftankvorrichtung, der erste Tank und/oder das Befestigungsmittel umfassen ein oder mehrere Verbindungselemente. Das Verbindungselement umfasst beispielsweise eine Bohrung, eine Ausnehmung, eine Öse, eine konische Aufnahme, einen Haken, einen Gewindebolzen, eine Mutter, eine Schraube, ein Federelement, einen Exzenterspanner, eine Klemmschnalle, einen Gurt und/oder eine Ratsche.

Das Befestigungsmittel kann weitere Verbindungselemente zur Befestigung an einer Zugvorrichtung umfassen. Vorzugsweise ist das Befestigungsmittel an seiner Unterseite mit der Zugvorrichtung verbunden und an seiner Oberseite lösbar mit dem ersten Tank verbunden. Anders gesagt ist das Befestigungsmittel zwischen Zugvorrichtung und erstem Tank angeordnet. Alternativ kann das Befestigungsmittel auch unterhalb einer Zugvorrichtung angeordnet sein, wobei der erste Tank ausgehend von der Zugvorrichtung Richtung Boden vorsteht. Anders gesagt kann der erste Tank an der Zugvorrichtung unterflurmontiert sein. Alternativ zum Befestigungsmittel kann der erste Tank derart ausgebildet sein, dass eine Befestigungsfunktion im Tank integriert ist. Beispielsweise kann der erste Tank Verbindungsmittel, wie Bohrungen, Ösen, Haken, Schienen, Vertiefungen oder Ausnehmungen umfassten, die zur lösbaren Befestigung dienen. Die weiteren Verbindungselemente des Befestigungsmittels können vorteilhaft verhindern, dass die Befestigungsvorrichtung mit der Zugvorrichtung verschweißt werden muss oder diese verformt.

Die Zugvorrichtung umfasst vorzugsweise eine Deichsel, eine Zug- und Lenkvorrichtung, eine Starrdeichsel oder eine Gelenkdeichsel. Die Zugvorrichtung ist insbesondere an einem Anhänger zum Ziehen desselben angeordnet. Die Zugvorrichtung kann auch eine Anhängevorrichtung für ein Frontanbaugerät umfassen. Die Zugvorrichtung kann an ein Zugfahrzeug gekoppelt werden. Als Koppelvorrichtung bzw. Anhängevorrichtung zum Koppeln mit der Zugvorrichtung oder mit dem Anbaugerät werden insbesondere vorgeschlagen: eine Untenanhängung, ein Hitchhaken, ein Piton-Fix, ein Zugpendel, eine Obenanhängung, eine Schlittenplatte, eine Bolzenkupplung, ein Fronthubwerk, ein Heckhubwerk, ein Hubwerk und/oder eine Dreipunkthydraulik.

Die Kraftstofftankvorrichtung kann die Stützlast beeinflussen. Die Stützlast ist im Allgemeinen die Kraft, die bei Anhängern ohne ausreichenden Achsabstand auf eine Anhängevorrichtung bzw. Koppelvorrichtung des Zugfahrzeugs wirkt. Die Stützlast kann von einer bauartbedingten Höchstgeschwindigkeit (bbH), Leistung und Kopplungsvorrichtung des Zugfahrzeugs abhängen. Für Traktoren sind folgende Stützlasten üblich:

| | |
|---|---|
| Obenanhängung: | 2 t |

| | |
|---|---|
| Untenanhängung, Zugöse: | 3 t bei ≤ 40 km/h bbH |
| | 2 t bei > 40 km/h bbH |
| Untenanhängung, Zug-Kugel 80: | 4 t bei ≤ 40 km/h bbH |
| | 2 t bei > 40 km/h bbH |
| Untenanhängung, Zug-Kugel 50: | 150 kg |

Zum Ausgleich einer durch die erfindungsgemäße Kraftstofftankvorrichtung erhöhte Stützlast wird insbesondere ein Ausgleichs-Ballast-Gewicht vorgeschlagen. Das Ausgleichs-Ballast-Gewicht kann an einem Fronthubwerk des Zugfahrzeugs und/oder an einer Anhängerrückseite angeordnet sein.

Der Anhänger umfasst insbesondere: einen Wagen, einen Tieflader, eine Drillmaschine, eine Egge, einen Gabelheuwender, einen Gurkenflieger, einen Grubber, eine Hackmaschine, einen Ladewagen, einen Packer, einen Pflug, eine Sämaschine, einen Schwader, ein Anbaugerät, einen Hackstriegel, einen Tankwagen, einen Güllewagen, eine Walze, eine Wiesenegge, Strohballenpresse, einen Ballensammler, eine Ballenwickelmaschine, eine Feldspritze, einen Futtermischwagen, einen Kartoffelroder oder ein Überladewagen.

Das Anbaugerät ist im Allgemeinen ein Gerät, das an ein landwirtschaftliches Zugfahrzeug angebaut werden kann. Das Anbaugerät kann an einem Hubwerk bzw. einer Dreipunkthydraulik eines Zugfahrzeugs angeordnet sein. Das Anbaugerät kann von einer Zapfwelle des Zugfahrzeugs angetrieben werden. Vorzugsweise umfasst das Anbaugerät: einen Anbaustapler, eine Ballenzange, einen Düngestreuer, eine Fräse, einen Anhänger, einen Frontlader, einen Kreiselmäher oder eine Schneefräse.

Ein Zugfahrzeug umfasst im Allgemeinen eine motorbetriebene landgebundene Zugmaschine, z.B. ein Traktor, zum Ziehen von Wagen, Anhängern, Tiefladern, Sattelaufliegern, landwirtschaftlichen Anbaugeräten, Ballastrierungen und anderen nicht angetriebenen Fahrzeugen. Das Zugfahrzeug kann ferner umfassen: einen Geräteträger, einen allradgetriebenen Geräteträger, eine selbstfahrende Arbeitsmaschine, einen Bagger, einen Radlader, einen Autokran, eine Erntemaschine, einen Mähdrescher, ein Schienenreinigungsfahrzeug, eine Schneepflug, eine Straßenwalze oder einen Übertragungswagen.

Das Befestigungsmittel kann mit dem ersten Tank zusammen ein Tank-Anbaugerät bilden. Das Befestigungsmittel kann direkt an die Koppelvorrichtung gekoppelt sein. Insbesondere kann das Tank-Anbaugerät an eine erste Koppelvorrichtung gekoppelt sein, während gleichzeitig ein Anhänger an eine zweiten Koppelvorrichtung gekoppelt ist. Das Tank-Anbaugerät kann ein Ballast-Gewicht bilden.

Die erfindungsgemäße Kraftstofftankvorrichtung kann mittels des Befestigungsmittels ein schnelles Austauschen, Wechseln, ein Lösen und/oder Befestigen des ersten Tanks ermöglichen. Die Form des ersten Tanks ist im Allgemeinen platzsparend. Die Anordnung des ersten Tanks auf einer Zugvorrichtung oder an einem Anbaugerät des ersten Tanks kann Platz sparen. Ist in einem Zugfahrzeug nicht ausreichend Platz für den ersten Tank oder ist in der Zugmaschine ein zweiter Tank angeordnet, so kann die erfindungsgemäße Kraftstofftankvorrichtung vorteilhaft die Reichweite des Zugfahrzeugs erhöhen.

Herkömmliche Wasserstofftanks sind meist direkt in einem Zugfahrzeug integriert. In einigen bekannten Fällen sind mehrere Wasserstofftanks auf oder unter der Ladefläche eines Anhängers befestigt. Die erfindungsgemäße Kraftstofftankvorrichtung schlägt jedoch einen einzelnen ersten Wasserstofftank vor, der weder im Zugfahrzeug noch auf oder unter der Ladefläche eines Anhängers sondern an einer Zugvorrichtung des Anhängers oder an dem Anbaugerät angeordnet ist oder anordenbar ist. Ferner ist der erste Tank der erfindungsgemäßen Kraftstofftankvorrichtung lösbar von einem Befestigungsmittel gehalten, während herkömmliche Wasserstofftanks meist fest verbaut sind.

In anderen bekannten Nutzfahrzeugen sind zwar Wechselvorrichtungen für Tanks vorgesehen, diese dienen jedoch dazu einen Tankvorgang zu ersetzen bzw. zu beschleunigen und einen gefüllten Austauschtank im Nutzfahrzeug gegen einen leeren Tank zu tauschen. Das Befestigungsmittel der erfindungsgemäßen Kraftstofftankvorrichtung ist jedoch nicht in einem Nutzfahrzeug bzw. Zugfahrzeug angeordnet sondern vielmehr ausgelegt, um insbesondere an der Zugvorrichtung des Anhängers oder am Anbaugerät befestigt zu sein. Der erste Tank der erfindungsgemäßen Kraftstofftankvorrichtung dient insbesondere dazu auf verschiedenen Anhängern oder Anbaugeräten befestigt zu werden und nicht um Tankvorgänge zu beschleunigen.

Gemäß einer bevorzugten Weiterbildung kann der erste Tank eine erste Gaskupplung umfassen. Die Gaskupplung umfasst insbesondere eine Schlauchkupplung, eine Gas-Schlauchkupplung oder eine Einhand-Schnellkupplung. Vorzugsweise umfasst die Gaskupplung eine Wasserstoffgaszapfpistole oder eine Wasserstoffgastankkupplung. Ferner kann die Gaskupplung ein Sicherheitsventil, eine Schmutzbarriere, eine Feuchtigkeitsbarriere und/oder eine Nottrennkupplung umfassen.

Gemäß einer weiteren Ausgestaltung kann die erfindungsgemäße Kraftstofftankvorrichtung eine flexible Gasleitung umfassen. Die Gasleitung umfasst insbesondere an einem Ende eine zweite Gaskupplung zum Anschließen an die erste Gaskupplung und an einem anderen Ende eine dritte Gaskupplung zum Anschließen an das Zugfahrzeug. Die Flexibilität der Gasleitung ermöglicht insbesondere einer Relativbewegung zwischen Anhänger und Zugfahrzeug zu folgen. Die Flexibilität der Gasleitung kann ein leichteres Verbinden bzw. Anschließen bzw. Trennen von einer vierten Gaskupplung am Zugfahrzeug ermöglichen.

Die vierte Gaskupplung ist insbesondere mittig an der Zugfahrzeug-Rückseite angeordnet. Das Zugfahrzeug kann eine fünfte Gaskupplung mittig an der Zugfahrzeug-Frontseite aufweisen. Die vierte und/oder fünfte Gaskupplung sind über eine Leitung mit einem Wasserstoffmotor des Zugfahrzeugs und/oder einem zweiten Tank des Zugfahrzeugs verbunden. Die Gasleitung umfasst insbesondere eine Armierung. Die Armierung verbessert insbesondere die Sicherheit gegen Beschädigung oder Abreißen bei rauer, landwirtschaftlicher Nutzung.

Die erste, zweite, dritte, vierte und/oder fünfte Gaskupplung können eine Füllkupplung zur Wasserstoffbetankung umfassen. Ein Füllkupplung kann neben der Funktion zur Verbindung zu einer anderen Kupplung vorteilhaft auch eine Funktion zur Wasserstoffbetankung umfassen. Die erste, zweite, dritte, vierte und/oder fünfte Gaskupplung können ein Sicherheitsventil umfassen. Falls die erste, zweite, dritte, vierte und/oder fünfte Gaskupplung unbeabsichtigt getrennt werden, kann das Sicherheitsventil den Austritt von Wasserstoffgas verhindern oder verringern.

Eine vorteilhafte Weiterbildung sieht vor, dass die Kraftstofftankvorrichtung wenigstens ein Sicherheitsventil umfasst. Das Sicherheitsventil kann am ersten Tank oder in der ersten, zweiten, dritten, vierten und/oder fünften Gaskupplung angeordnet sein. Das Sicherheitsventil kann den unbeabsichtigten Austritt von Wasserstoffgas verhindern oder verringern.

Gemäß einer weiteren Ausbildung kann der erste Tank wenigstens einen Transportbeschlag zur Verbindung mit einem Transportgerät aufweisen. Der wenigstens eine Transportbeschlag umfasst: eine Öse, einen Haken und/oder Aussparungen für Staplergabeln. Der erste Tank kann in der Herstellung und Anschaffung teuer sein. Um den erste Tank vorteilhaft mit verschiedenen Anhängern oder Anbaugeräten einsetzen zu können, ist es vorteilhaft ihn leicht und schnell von einem Anhänger bzw. Anbaugerät zu einem anderen Anhänger bzw. Anbaugerät umsetzen zu können. Der Transportbeschlag kann das Umsetzen des ersten Tanks erleichtern und beschleunigen. Als Transportgerät wird insbesondere vorgeschlagen: ein Gabelstapler, ein Flaschenzug, ein Kran, ein Traktorfrontlader, eine Koppelvorrichtung und/oder eine Dreipunkthydraulik.

Gemäß einer weiteren Ausgestaltung kann die erfindungsgemäße Kraftstofftankvorrichtung wenigstens einen Sensor umfassen, der detektiert, ob der erste Tank vom Befestigungsmittel gelöst ist. Insbesondere detektiert der Sensor, ob sich der erste Tank unbeabsichtigt vom Befestigungsmittel gelöst hat.

Die Kraftstofftankvorrichtung und/oder das Zugfahrzeug können einen Computer umfassen. Der Computer kann den Sensor auslesen und ermitteln, ob sich der erste Tank vom Befestigungsmittel gelöst hat. Wenn sich der erste Tank unbeabsichtigt gelöst hat, kann der Computer ein Steuersignal an das wenigstens eine Sicherheitsventil ausgeben, Das Steuersignal bewirkt, dass das wenigstens eine Sicherheitsventil betätigt wird und schließt. Der Sensor kann die Betriebssicherheit der erfindungsgemäßen Kraftstofftankvorrichtung erhöhen.

In einer weiteren Ausführung kann die erfindungsgemäße Kraftstofftankvorrichtung einen Drucksensor zum Detektieren eines Drucks im ersten Tank umfassen. Der Computer kann den Drucksensor auslesen und ermitteln, welcher Druck im ersten Tank vorherrscht. Der Computer kann den Druck über die Zeit aufzeichnen. Ferner kann der Computer ermitteln, ob der Druck schneller ansteigt oder abfällt als ein erwarteter Wert, ein Mittelwert oder ein Verbrauchswert. Das wenigstens eine Sicherheitsventil kann in Abhängigkeit des detektierten Drucks betätigt werden.

In Anspruch 9 wird ein erfindungsgemäßes Schnellwechsel-System vorgeschlagen. Das Schnellwechsel-System umfasst insbesondere einen Wasserstofftank; einen Transportbeschlag, der am Wasserstofftank angeordnet ist; eine erste Schnellwechselplattform, die ausgelegt ist an einer ersten Zugvorrichtung oder an einem ersten Anbaugerät befestigt zu sein und eine zweite Schnellwechselplattform, die ausgelegt ist an einer zweiten Zugvorrichtung oder an einem zweiten Anbaugerät befestigt zu sein. Der Wasserstofftank ist insbesondere lösbar mit der ersten Schnellwechselplattform verbunden. Der Wasserstofftank kann von der ersten Schnellwechselplattform gelöst, an seinem Transportbeschlag angehoben, zur zweiten Schnellwechselplattform transportiert, an seinem Transportbeschlag auf die zweite Schnellwechselplattform abgesenkt und mit der zweiten Schnellwechselplattform lösbar verbunden werden.

Das erfindungsgemäße Schnellwechselsystem ermöglicht eine schnelles Befestigen und Lösen des Wasserstofftanks auf bzw. von verschiedenen Anhänger-Zugvorrichtungen oder Anbaugeräten, um die Reichweite eines Zugfahrzeugs, an dem der Anhänger oder Anbaugeräte angekoppelt ist, zu erhöhen. Die Anordnung des Wasserstofftanks an der ersten oder zweiten Schnellwechselplattform, die wiederum an der ersten Zugvorrichtung oder zweiten Zugvorrichtung anordenbar ist, ist im Allgemeinen platzsparend. Die Anordnung ist insbesondere platzsparender als eine Anordnung in einem Zugfahrzeug oder auf der Ladefläche des Anhängers.

Der Wasserstofftank des erfindungsgemäßen Schnellwechselsystems kann den ersten Tank der erfindungsgemäßen Kraftstofftankvorrichtung umfassen. Der Transportbeschlag des erfindungsgemäßen Schnellwechselsystems kann den Transportbeschlag der erfindungsgemäßen Kraftstofftankvorrichtung umfassen. Die erste Schnellwechselplattform des erfindungsgemäßen Schnellwechselsystems kann das Befestigungsmittel der erfindungsgemäßen Kraftstofftankvorrichtung umfassen. Die zweite Schnellwechselplattform des erfindungsgemäßen Schnellwechselsystems kann das Befestigungsmittel der erfindungsgemäßen Kraftstofftankvorrichtung umfassen. Die erste Zugvorrichtung des erfindungsgemäßen Schnellwechselsystems kann die Zugvorrichtung der erfindungsgemäßen Kraftstofftankvorrichtung umfassen. Die zweite Zugvorrichtung des erfindungsgemäßen Schnellwechselsystems kann die Zugvorrichtung der erfindungsgemäßen Kraftstofftankvorrichtung umfassen. Das erste Anbaugerät des erfindungsgemäßen Schnellwechselsystems kann das Anbaugerät der erfindungsgemäßen Kraftstofftankvorrichtung umfassen. Das zweite Anbaugerät des erfindungsgemäßen Schnellwechselsystems kann das Anbaugerät der erfindungsgemäßen Kraftstofftankvorrichtung umfassen.

In Anspruch 10 wird ein erfindungsgemäßes Gespann vorschlagen. Das Gespann kann ein Zugfahrzeug, ein Anbaugerät oder einen Anhänger umfassen, wobei das Anbaugerät oder der Anhänger mit dem Zugfahrzeug gekoppelt ist. Das Gespann kann eine erfindungsgemäße Kraftstoffvorrichtung umfassen.

Als Gespann wird im Allgemeinen eine Kombination aus einem nicht selbst angetriebenem Landfahrzeug und einem vorgespannten Zugfahrzeug verstanden. Die erfindungsgemäße Kraftstofftankvorrichtung kann vorteilhaft die Reichweite des Gespanns erhöhen. Wird das Anbaugerät oder der Anhänger im Gespann gegen ein anderes Anbaugerät oder einen anderen Anhänger getauscht, so ermöglicht die Kraftstofftankvorrichtung ein schnelles mittauschen des ersten Tanks.

Gemäß einer Weiterbildung kann das Zugfahrzeug des erfindungsgemäßen Gespanns einen zweiten Tank zum Bevorraten von Wasserstoff umfassen. Vorzugsweise ist der zweite Tank mit dem ersten Tank verbunden. Insbesondere umfasst das Gespann eine Gasleitung, die den ersten und zweiten Tank miteinander verbindet. Wasserstoff aus dem zweiten Tank kann zum ersten Tank geleitet werden, um diesen zu betanken. Vorzugsweise umfasst eine Achse oder eine Teilachse des Zugfahrzeugs einen Hohlraum, der den zweiten Tank bildet. Vorzugsweise umfasst das Gespann wenigstens ein Rückschlagventil. Das Rückschlagventil kann verhindern, dass ein Leck in einem der Tanks dazu führt, dass auch der andere Tank leckt.

In Anspruch 14 wird ein erfindungsgemäßes Sicherungsverfahren zum Sichern der erfindungsgemäßen Kraftstofftankvorrichtung vorgeschlagen. Das Sicherungsverfahren umfasst insbesondere die Schritte: Auslesen eines Sensors, der detektiert, ob der erste Tank vom Befestigungsmittel gelöst ist, und Betätigen eines Sicherheitsventils der erfindungsgemäßen Kraftstofftankvorrichtung in Abhängigkeit der Sensorauslesung.

Der Computer der erfindungsgemäßen Kraftstofftankvorrichtung kann den Sensor auslesen und ein Steuersignal erzeugen, das das Sicherheitsventil betätigt.

In Anspruch 15 wird ein erfindungsgemäßes Überwachungsverfahren zum Überwachen des erfindungsgemäßen Gespanns vorgeschlagen. Das Überwachungsverfahren umfasst insbesondere die Schritte: Überwachen des Drucks im ersten und/oder zweiten Tank; Ermitteln eines Wasserstoffverbrauchs anhand der Drucküberwachung; Bestimmen des Ortes und/oder eines zurückgelegten Weges des erfindungsgemäßen Gespanns; Berechnen von Statusinformation basierend auf dem überwachten Druck, dem ermittelten Wasserstoffverbrauch, des Ortes und/oder des zurückgelegten Weges des Gespanns.

Der Computer umfasst insbesondere einen PC, einen Mikrocontroller, ein Smartphone, ein Tablet, einen Industrie-PC oder ein Motorsteuergerät. Der Computer kann einen Prozessor und einen Speicher umfassen. Auf dem Speicher ist vorzugsweise eine Software gespeichert. Die Software kann die Schritte des Sicherungsverfahrens oder des Überwachungsverfahrens implementieren, wenn sie von dem Prozessor ausgeführt wird.

Es wird ferner vorgeschlagen: ein Computerprogrammprodukt, vorzugsweise umfassend Befehle, die bei der Ausführung des Programms durch den Computer diesen veranlassen, das erfindungsgemäße Überwachungsverfahren auszuführen. Es wird ferner vorgeschlagen: ein weiteres Computerprogrammprodukt, vorzugsweise umfassend Befehle, die bei der Ausführung des Programms durch den Computer diesen veranlassen, das Sicherungsverfahren auszuführen. Außerdem wird vorgeschlagen: ein computerlesbares (Speicher)medium, umfassend Befehle, die bei der Ausführung durch den Computer diesen veranlassen, das die Schritte des erfindungsgemäßen Überwachungsverfahren auszuführen. Außerdem wird vorgeschlagen: ein weiteres computerlesbares (Speicher)medium, umfassend Befehle, die bei der Ausführung durch den Computer diesen veranlassen, das die Schritte des erfindungsgemäßen Sicherungsverfahren auszuführen.

### KURZE BESCHREIBUNG DER ZEICHNUNGEN

Ausführungsbeispiele der Erfindung werden anhand der Zeichnungen und der nachfolgenden Beschreibung näher erläutert. Es zeigen:
Figur 1 ein Ausführungsbeispiel einer Kraftstofftankvorrichtung gemäß der Erfindung,
Figur 2a ein Ausführungsbeispiel eines Gespanns gemäß der Erfindung,
Figur 2b ein weiteres Ausführungsbeispiel eines Gespanns gemäß der Erfindung,
Figur 2c ein weiteres Ausführungsbeispiel eines Gespanns gemäß der Erfindung,
Figur 2d ein weiteres Ausführungsbeispiel eines Gespanns gemäß der Erfindung und
Figur 2e ein weiteres Ausführungsbeispiel eines Gespanns gemäß der Erfindung und
Figur 2f ein weiteres Ausführungsbeispiel eines Gespanns gemäß der Erfindung und
Figur 2g ein weiteres Ausführungsbeispiel eines Gespanns gemäß der Erfindung.

### BESCHREIBUNG VON AUSFÜHRUNGSFORMEN

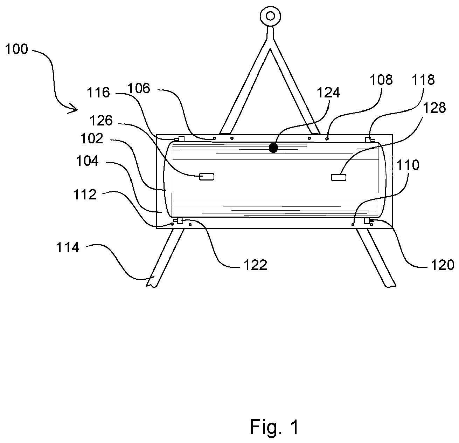

In der Figur 1 ist eine Kraftstofftankvorrichtung 100 in einer Draufsicht gezeigt. Die Kraftstofftankvorrichtung 100 umfasst einen ersten Tank 102 zum Bevorraten von Wasserstoffgas und eine Schnellwechselplattform 104. Die Schnellwechselplattform 104 kann ein Befestigungsmittel bilden. Die Schnellwechselplattform 104 weist mehrere Universalverbindungen 106, 108, 110 und 112 auf, die eine sichere Befestigung an verschiedenen Anhängerdeichseln und Anbaugeräten ermöglichen. Die Universalverbindungen weisen jeweils 2 Bohrungen in der Schnellwechselplattform 104 sowie je ein U-Stück mit Gewindeenden auf. Das U-Stück umschließt eine Deichsel 114 und wird mit Muttern an einer Oberseite der Schnellwechselplattform 104 befestigt. Die Deichsel 114 darf nicht geschweißt oder verformt werden. Die Universalverbindungen 106, 108, 110 und 112 bilden weitere Verbindungselemente. Von der Deichsel 114 ist nur ein Abschnitt in Figur 1 gezeigt.

Der erste Tank 102 ist zylinderförmig und hat eine Abmessung von 1 m Länge und 0,3 m Radius. Der erste Tank 102 hat eine Volumen von ca. 280 I. Die Schnellwechselplattform 104 hat eine Abmessung von 1,3 m Länge und 0,8 m Breite. Der Tank 102 ist mittig auf der Schnellwechselplattform 104 angeordnet. Die Schnellwechselplattform 104 steht an allen vier Seiten über eine Kontur des ersten Tanks 102 vor und bildet dadurch einen Anfahrschutz.

Der erste Tank 102 wird mittels vier Schnellspannverbindungen 116, 118, 120 und 122 lösbar auf der Schnellwechselplattform 104 gehalten. Die Schnellspannverbindungen 116 bis 122 können werkzeuglos und manuell mit einer Hand leicht ver- und entriegelt werden.

Des Weiteren umfasst der erste Tank 102 eine kombinierte Schlauchkupplung mit Sicherheitsventil 124, die zum Betanken und zum Anschluss einer Leitung dient. Die Deichsel 114 gehört zu einem Kipper. Die Leitung ist mit einem Traktor verbunden, der die Deichsel 114 des Kippers zieht. Der Traktor hat einen Wasserstoffmotor. Der erste Tank 102 liefert dem Wasserstoffmotor Kraftstoff. Der erste Tank 102 verlängert die Reichweite des Traktors. Der erste Tank 102 umfasst ferner zwei Transportösen 126, 128. Die Deichsel eines anderer Anhängers kann eine weitere Schnellwechselplattform aufweisen. Wenn der Traktor statt mit dem Kipper mit dem anderen Anhänger gekoppelt wird, so können die vier Schnellspannverbindungen 116, 118, 120 und 122 entriegelt, der erste Tank 102 an seinen Transportösen 126, 128 von einem Kran angehoben und auf die weitere Schnellwechselplattform abgesenkt und dort mittels weiterer Schnellspannvorrichtungen verriegelt werden. Dadurch kann der erste Tank 102 auf einem anderen Anhänger die Reichweite des Traktors erhöhen.

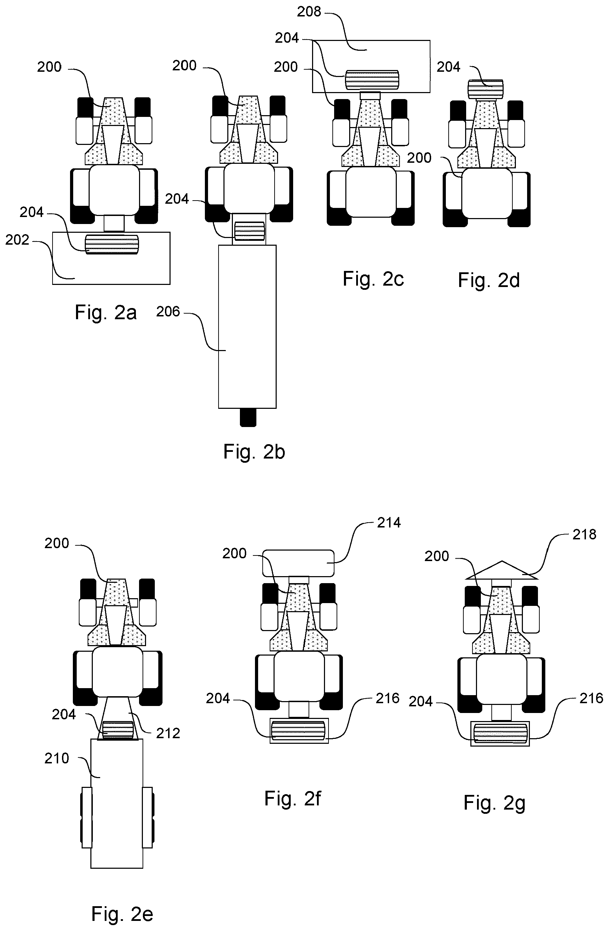

In der Figur 2a ist ein Traktor 200 gezeigt, an dem heckseitig ein Kreiselmäher 202 angekoppelt ist. Der Kreiselmäher 202 ist ein Anbaugerät, das an eine Dreipunkthydraulik und eine Zapfwelle des Traktors 200 gekoppelt ist. Auf dem bzw. an einer Oberseite des Kreiselmähers 202 ist eine Schnellwechselplattform und darauf ein Wasserstofftank 204 angeordnet. Anders gesagt die Schnellwechselplattform ist zwischen Kreismäher 202 und Wasserstofftank 204 angeordnet.

In der Figur 2b ist der Traktor 200 gezeigt, an dem heckseitig eine Aufsattelpflug 206 angekoppelt ist. Der Aufsattelpflug 206 hat eine Zugvorrichtung 208. Auf der Zugvorrichtung 208 ist die Schnellwechselplattform und darauf der Wasserstofftank 204 angeordnet.

In der Figur 2c ist der Traktor 200 gezeigt, an dessen Front-Dreipunkthydraulik ein Frontmähwerk 208 angekoppelt ist. Auf dem Frontmähwerk ist die Schnellwechselplattform und darauf der Wasserstofftank 204 angeordnet.

In der Figur 2d ist der Traktor 200 gezeigt, an dessen Front-Dreipunkthydraulik ein Wasserstofftank 204 mittels der Schnellwechselplattform angekoppelt ist. Der Wasserstofftank 204 bildet zusammen mit der Schnellwechselplattform in diesem Ausführungsbeispiel ein Ballastgewicht, d.h. ein Anbaugerät.

In der Figur 2e ist der Traktor 200 gezeigt, am dem heckseitig an einer Untenanhängung ein Güllewagen 210 gekoppelt ist. Der Güllewagen 210 umfasst eine Deichsel 212. Auf der Deichsel 212 ist die Schnellwechselplattform und darauf der Wasserstofftank 204 angeordnet.

In der Figur 2f ist der Traktor 200 gezeigt, an den ein Frontmähwerk 214 und ein Heckträger 216 gekoppelt sind. Der Heckträger 216 wirk als Anbaugerät und umfasst den Wasserstofftank 204. Gemäß eines weiteres Ausführungsbeispiels ist der Wasserstofftank 204 auf dem Frontmähwerk 214 angeordnet.

In der Figur 2g ist der Traktor 200 gezeigt, an den frontseitig ein Schneeräumschild 218 und heckseitig der Heckträger 216 angekoppelt sind. Der Heckträger 216 kann einen Salzstreuer umfassen. Gemäß eines weiteren Ausführungsbeispiels ist der der Wasserstofftank 204 auf einer Koppelvorrichtung des Schneeräumschilds 218 angeordnet.

Die Ausführungsbeispiele in den Figuren 2a bis 2g zeigen Gespanne mit vielseitigen Anwendungen des ersten Wasserstofftanks 204. Der Wasserstofftank 204 ist einfach und schnell von einer Schnellwechselplattform zu einer anderen montierbar. Der Traktor 200 umfasst einen weiteren Wasserstofftank. Mittels des Wasserstofftanks 204 wird die Reichweite des Traktors 200 erheblich erhöht.

### LISTE DER BEZUGSZEICHEN

- 100: Kraftstofftankvorrichtung
- 102: Erster Tank
- 104: Schnellwechselplattform
- 106: Universalverbindung
- 108: Universalverbindung
- 110: Universalverbindung
- 112: Universalverbindung
- 114: Deichsel
- 116: Schnellspannverbindung
- 118: Schnellspannverbindung
- 120: Schnellspannverbindung
- 122: Schnellspannverbindung
- 124: Kombinierte Schlauchkupplung mit Sicherheitsventil
- 126: Transportöse
- 128: Transportöse
- 200: Traktor
- 202: Kreiselmäher
- 204: Wasserstofftank
- 206: Aufsattelpflug
- 208: Frontmähwerk
- 210: Güllewagen
- 212: Deichsel
- 214: Frontmähwerk
- 216: Heckträger
- 218: Schneeräumschild

## Patentansprüche

1. Kraftstofftankvorrichtung (100) für einen Anhänger (206, 210) oder ein Anbaugerät (202, 204, 208) mit:
einem ersten Tank (102; 204) zum Bevorraten von Wasserstoff,
einem Befestigungsmittel (104), wobei das Befestigungsmittel (104) ausgelegt ist den ersten Tank (102; 204) lösbar zu halten und wobei das Befestigungsmittel (104) ausgelegt ist, um an einer Zugvorrichtung (114; 212) des Anhängers (206, 210) oder am Anbaugerät (202, 204, 208, 214, 216, 218) befestigt zu sein.

2. Kraftstofftankvorrichtung (100) nach Anspruch 1
**dadurch gekennzeichnet, dass**
der erste Tank (102; 204) eine erste Gaskupplung (124) umfasst.

3. Kraftstofftankvorrichtung (100) nach Anspruch 1 oder 2
**dadurch gekennzeichnet, dass**
die Kraftstofftankvorrichtung (100) eine flexible Gasleitung umfasst, die an einem Ende eine zweite Gaskupplung zum Anschließen an die erste Gaskupplung (124) und die an einem anderen Ende eine dritte Gaskupplung zum Anschließen ein Zugfahrzeug (200) umfasst.

4. Kraftstofftankvorrichtung (100) nach einem der vorhergehenden Ansprüche
**dadurch gekennzeichnet, dass**
die Kraftstofftankvorrichtung (100) wenigstens ein Sicherheitsventil (124) umfasst.

5. Kraftstofftankvorrichtung (100) nach einem der vorhergehenden Ansprüche
**dadurch gekennzeichnet, dass**
das Befestigungsmittel (104) eine Abmessung aufweist, die größer als eine Abmessung des ersten Tanks (102; 204) ist.

6. Kraftstofftankvorrichtung (100) nach einem der vorhergehenden Ansprüche
**dadurch gekennzeichnet, dass**
der erste Tank (102; 204) wenigstens einen Transportbeschlag (126, 128) zur Verbindung mit einem Transportgerät aufweist.

7. Kraftstofftankvorrichtung (100) nach einem der vorhergehenden Ansprüche
**dadurch gekennzeichnet, dass**
die Kraftstofftankvorrichtung (100) wenigstens einen Sensor umfasst, der detektiert, ob der erste Tank (102; 204) vom Befestigungsmittel gelöst ist.

8. Kraftstofftankvorrichtung (100) nach einem der vorhergehenden Ansprüche
**dadurch gekennzeichnet, dass**
die Kraftstofftankvorrichtung (100) einen Drucksensor zum Detektieren eines Drucks im ersten Tank (102; 204) umfasst.

9. Schnellwechsel-System mit:
einem Wasserstofftank (102; 204);
einem Transportbeschlag (126, 128), der am Wasserstofftank (102; 204) angeordnet ist;
einer ersten Schnellwechselplattform (104), die ausgelegt ist an einer ersten Zugvorrichtung (114; 212) oder an einem ersten Anbaugerät (202, 204, 208, 214, 216, 218) befestigt zu sein;
einer zweiten Schnellwechselplattform (104), die ausgelegt ist an einer zweiten Zugvorrichtung (114; 212) oder an einem zweiten Anbaugerät (202, 204, 208, 214, 216, 218) befestigt zu sein,
**dadurch gekennzeichnet, dass**
der Wasserstofftank (102; 204) lösbar mit der ersten Schnellwechselplattform (104) verbunden ist, wobei der Wasserstofftank (102; 204) von der ersten Schnellwechselplattform (104) gelöst, an seinem Transportbeschlag (126, 128) angehoben, zur zweiten Schnellwechselplattform (104) transportiert, an seinem Transportbeschlag (126, 128) auf die zweite Schnellwechselplattform (104) abgesenkt und mit der zweiten Schnellwechselplattform (104) lösbar verbunden wird.

10. Gespann mit:
einem Zugfahrzeug (200),
einem Anbaugerät (202, 204, 208, 214, 216, 218) oder einem Anhänger (206, 210),
wobei das Anbaugerät (202, 204, 208, 214, 216, 218) oder der Anhänger (206, 210) mit dem Zugfahrzeug (200) gekoppelt ist
**dadurch gekennzeichnet, dass**
das Gespann eine Kraftstofftankvorrichtung (100) nach einem der Ansprüche 1 bis 8 umfasst.

11. Gespann nach Anspruch 10
**dadurch gekennzeichnet, dass**
das Zugfahrzeug (100) einen zweiten Tank zum Bevorraten von Wasserstoff umfasst.

12. Gespann nach Anspruch 11 oder 12
**dadurch gekennzeichnet, dass**
der zweite Tank mit dem ersten Tank (102; 204) verbunden ist.

13. Gespann nach einem der Ansprüche 10 bis 12
**dadurch gekennzeichnet, dass**
das Zugfahrzeug (200) eine Achse oder eine Teilachse mit einem Hohlraum umfasst, wobei der Hohlraum den zweiten Tank bildet.

14. Sicherungsverfahren zum Sichern einer Kraftstofftankvorrichtung (100) nach Anspruch 1 mit den Schritten:
Auslesen eines Sensors, der detektiert, ob der erste Tank (102; 204) vom Befestigungsmittel (104) gelöst ist, und
Betätigen eines Sicherheitsventils (124) der Kraftstofftankvorrichtung (100) in Abhängigkeit der Sensorauslesung.

15. Überwachungsverfahren zum Überwachen eines Gespanns nach einem der Ansprüche 10 bis 13 mit den Schritten:
Überwachen des Drucks im ersten (102; 204) und/oder zweiten Tank;
Ermitteln eines Wasserstoffverbrauchs anhand der Drucküberwachung;
Bestimmen des Ortes und/oder eines zurückgelegten Weges des Gespanns;
Berechnen von Statusinformation basierend auf dem überwachten Druck, dem ermittelten Wasserstoffverbrauch, des Ortes und/oder des zurückgelegten Weges des Gespanns.
